# EUROPEAN PATENT APPLICATION

(11) **EP 2 879 133 A1**
(43) Date of publication of application: **03.06.2015**
(21) Application number: 13822664.2
(22) Date of filing: 01.07.2013
(51) Int. Cl.: G21C 15/28, G21C 3/16, G21C 1/07, G21C 3/18

(54) **SPHERICAL FUEL REACTOR**

(30) Priority: 25.07.2012 CN 201210259580
(71) Applicant: Li, Zhengwei, Huangpu District, Guangzhou Guangdong 510730 (CN)
(72) Inventor: Li, Zhengwei, Huangpu District, Guangzhou Guangdong 510730 (CN)
(74) Representative: Riechelmann & Carlsohn Patentanwälte
(86) International application number: PCT/CN2013/078569
(87) International publication number: WO 2014/015740

(57) **Abstract**

Disclosed is a spherical fuel reactor, the nuclear fuel and coolant packaged together in spherical solid, through two sets of mechanical transmission system (4), so that the spherical solid in the reactor vessel (1)and steam generator (2) between the circulation, the reactor to heat to steam generator to. The reactor has the inherent safety, outlet temperature parameters of high, can take full advantage of the characteristics of nuclear fuel, can be used in areas such as power, liquefying and gasifying hydrogen production, heating, coal.

## Description

### Technical field

The invention belongs to the nuclear reactor engineering research and design field, relates to a spherical fuel reactor.

### The technical background

Spherical fuel element has been used in high temperature gas cooled reactor, due to its easy loading, refueling, the advantages of good ability of containing radioactive material, has been widely accepted. The molten salt reactor has good comprehensive properties, however, strong corrosion resistance and high temperature molten salt is the engineering problems difficult to solve.

### The content of the invention

The invention of spherical fuel reactor is a nuclear fuel and solid coolant packaged together in spherical solid, made of spherical fuel element, and by mechanical transmission system, so that the spherical solid circulation between the reactor and steam generator, heat from the reactor to transfer to the steam generator.

Is generally believed that only the liquid and gas can be used as the reactor coolant, the invention of spherical fuel reactor is used as a coolant for spherical solid. Spherical solid rolling ability good, spherical solid particle mass flow together, can exhibit some characteristics and liquid flow similar, especially when the spherical solid particle size was smaller, the flow characteristics of flow characteristics and the liquid is very similar. Spherical fuel reactor is made spherical solid particle by its own gravity in the reactor from the top down flow, and enhance the transmission device to enhance the spherical solid particles to the required height, spherical solid continuous upper and lower circulation flow. Spherical fuel reactor using circulation the spherical solid particles to transfer heat. The heat transfer from high temperature to low temperature. The nuclear fuel package in spherical solid, solid coating with good ability of radioactive substances, can prevent the spread of radioactive substances, is conducive to the safety of. The process of heat transfer is not only has the practical value in the reactor, in other industrial fields may also have application value.

Have a great relationship characteristics of spherical solid particle mass flow and the particle size, the smaller particle size, the more close to the liquid flow characteristics, traits and liquid closer to. Spherical solid particles by flow rolling to own, flow under the action of gravity when in fact only contact with the wall of the ball rolling, the other ball above the main in translation. The smaller the particle size, particle accumulation gap rate is small, thermal conductivity is better. If the particles are high temperature, particles by thermal radiation heat transfer is the need to consider the temperature, particle heat transfer by radiation speed may be faster than the thermal contact conductance. Spherical solid particle heat transfer rate is likely to be slower than the speed of heat transfer of water compared to, because the solid not through the turbulent heat transfer. Solid as a coolant is the advantage of nuclear fuel can diffuse in the solid inside, so that the heat is not too concentrated on one point, so it may lack the capacity of heat transfer. Cannot make the local temperature of the reactor is too high, so as to spherical solid reactor coolant volume power density are likely to be lower. The same power reactor with its total volume may be larger than the pressurized water reactor.

By some design can make a single nuclear fuel ball has the inherent safety of their number, can control the single ball inside the nuclear fuel, thus the heat generated speed can be controlled in a certain limits, so that nuclear fuel ball can put the heat through the heat radiation transfer out before its temperature rise too high, even when there is no other coolant conditions. The reactor and particle free of nuclear fuel more small size coolant ball, the ball is also used to the heat from the reactor. Nuclear fuel pellets by heat conduction and radiation heat transfers the heat to the coolant ball, the ball also make the reactor thermal margin, accident cases to transfer heat to the reactor outside, can also be coated nuclear fuel good, improve the safety of reactors. The solid material can be placed in the reactor vessel outside more, and to maintain good contact with the reactor vessel, heat can be transmitted out of such reactors by heat conduction and thermal radiation, the reactor will not melt.

The invention of spherical fuel reactor main loop reactor vessel, steam generator, lifting transmission device, the lower the height of the outlet of reactor is less than or equal to the height of the upper entrance of steam generator, reactor is equipped with two sets of lifting transmission device, which are used to put the ball shaped solid from the reactor outlet at the lower part of lifting and delivery to the steam generator upper entrance, the spherical solid the steam generator lower export promotion is transferred to the reactor vessel upper entrance. Spherical solid absorption nuclear reaction in the reactor vessel heat generated in the reactor vessel, to lower export in gravity, lifting transmission device to lift ball delivered to the steam generator entrance, spherical solid in steam generator which by its own gravity, and transferred to the cold side of the water, falling out of steam generator, promotion transmission device to lift ball is transferred to the reactor vessel upper entrance. This constant cycle, the heat from the reactor to the outgoing steam generator. Spherical fuel reactor is suitable for thermal and fast neutron reactor, can be designed into two types of reactors.

Lifting conveying device similar to the escalator, in order to reduce the nuclear fuel element damage, avoid the ball rolling, using two sets of lifting transmission device, the ball in the circulation process only gravity processes may be a collision. Mechanical transmission system as far as possible the use of large section low flow scheme. Low flow rate can reduce friction nuclear fuel ball by flow characteristics, and the spherical solid particles adaptation. Lifting conveying device should have good sealing performance, although the reactor running at near atmospheric pressure, still need to be filled with protective gas, isolating oxygen, make the main circuit to maintain a closed environment is necessary, closed loop can also be used as a radiation safety barrier. Although the use of a set of lifting transmission device is feasible, but the long-term fuel ball rolling wear will increase the influence of ball, ball service life. Lifting conveying device should be designed to solid particle transport of smaller size, can choose to use steel wire cloth belt. Lifting conveying device should be designed to solid particle transport of smaller size, can choose to use steel wire cloth belt. In order to prevent solid particles from the gap on both sides of the conveyor belt conveyor belt on both sides of the loss, guard rails, and the guardrail can follow the move along the belt. Also can transmit low design of middle high on both sides of the belt, the solid particles without loss to both sides. To prevent solid particles flow into the gap between the mobile and stationary component inside, affect the safe operation of transmission system. In order to minimize the impact of fuel balls in the above the reactor vessel by gravity falls, transmission system is also designed to be a down dip, the nuclear fuel ball slowly downward mobility, low transmission system design of a certain angle, the nuclear fuel ball does not flow back, this can be achieved through design the guiding track specific. Above the reactor vessel entrance guide groove is arranged, the nuclear fuel ball can slow down the flow of. The transmission system of the solid particle diameter is still has certain requirements, solid is too small to powder may not be suitable for the transmission device, because it is difficult to guarantee against loss in transmission process. The belt should be designed to have a certain flexibility, in order to reduce the collision damage nuclear fuel ball and conveyor belt, steel wire cloth can meet this requirement. Mechanical transmission system needs cooling measures, in order to prevent the temperature rise is too high to reduce the mechanical strength. The two set of lifting transmission device should keep the same flow, keep coordination is necessary.

Control of spherical fuel reactor with diameter and the control of pressurized water reactor rods compared to large, mainly because the nuclear fuel in the reactor vessel ball down flow is a process of mechanical movement, mechanical movement, mechanical strength requirements for the moving parts, control rod small obviously can not meet the needs of the mechanical strength, should control the columnar bar, the larger diameter. In order to characteristics and nuclear fuel ball machinery moving to adapt, circular runway that cross-section shape designed to control rods, parallel to its surface and nuclear fuel into the reactor vessel in the direction of the ball, which can reduce the flow resistance. If you have solid moderator, the control rods rods made of high mechanical strength in the moderator, no special requirements for control rod. Reactor control rod is arranged in a hollow cylinder made of high temperature resistant materials with high hardness of the inside of the tube, the casing wall should be thick, high mechanical strength. Because the characteristics of mechanical motion, spherical fuel reactor is higher for the mechanical strength requirements of reactor components. A plurality of control rod is arranged in the reactor vessel which may increase the spherical solid flow resistance, flow of spherical solid particles to be worse than the liquid. If the multi loop reactor, insufficient spherical solid flow direction is inconsistent can make up for its flow properties. And the pressurized water reactor, the control rods are mutually connected and fixed together, make the control rod assembly, mobile control rod can be realized under the control of the reaction inside the reactor.

Nuclear fuel spherical solid by the inner and outer nuclear fuel coolant. Spherical fuel reactor does not require coolant continued in a liquid, but also allow the coolant to change between solid and liquid. The power density of small reactor, by solid coolant, also does not need solid coolant melting, so can use some high temperature resistant materials as coolant, solid load ability, the ball is not easily damaged. Even slight damage, radioactive fission products are also difficult to spread, the solid particles will not loss of coolant, is beneficial to the system security. For small power reactor, the inherent safety of solid coolant system has higher. Used for solid material coolant should be neutron cross section, high thermal conductivity, low heat capacity, high temperature resistance, high hardness, so that very high temperatures can still covered with radioactive material good, Magnesium Oxide, alumina, silicon carbide is more common and high temperature resistant material, some composite materials such as metal ceramic, tungsten copper will meet the requirements of good. Silicon carbide has high specific heat capacity, 247 °C for 1266.93J/ (kg • K), large thermal conductivity, good high temperature performance, high hardness, good comprehensive properties of solid coolant. The nuclear fuel pellets of nuclear fuel powder is pressed into a one or two mm, with high temperature solid coolant will be covered up, make nuclear fuel ball about ten mm.

If you allow melting solid, or liquid fuel, the outermost layer of solid material for high temperature resistant and high strength are made of thick shell, a supporting structure between inner and outer, used to bear the external force, to avoid an external force is applied to the nuclear fuel element. Coolant transformation can greatly improve the heat transfer capability, solid materials with low melting point such as aluminum, magnesium, copper and their alloys used as cooling agent, coolant flow rate can be greatly reduced. Aluminum has a neutron cross section of low, stable chemical properties, high thermal conductivity, high specific heat capacity, low melting point, and nuclear fuel advantages coexist. Aluminum can and nuclear fuel forming alloys, aluminum melting, nuclear fuel can be free in liquid Al, forms a melt, melt with heat transfer ability, is conducive to the safety of the system, the aluminum can play the role of nuclear fuel cladding, the low melting point of aluminum but high boiling points, Reactor Severe Accident of PWR Core Melting, aluminum can prevent the spread of radioactive materials. The low melting point of aluminum, heat of fusion, is a metal coolant better comprehensive properties. Aluminum in the reactor melting and solidification in the steam generator, can realize the phase change heat transfer, this is important for fast neutron reactor, but due to liquid aluminum has no strength, spherical solid peripheral need shell made of high temperature resistant materials with high hardness, silicon carbide is a better choice. In order to improve the impact resistance of the ball, also need to set up in a spherical solid internal support structure, hardness higher the ball. Ball of damage causes outflow of radioactive liquid, with mechanical design good make the ball with high strength and high hardness is necessary. In order to make the coolant enough heat capacity, quantity of coolant. According to the need of practical application of the reactor, determine the heap size, reasonable arrangement of nuclear fuel and coolant quantity. There will be some gap between spherical solid, coolant ball using smaller to fill those gaps is necessary, small coolant ball also with nuclear fuel cycle by lifting conveyer ball together between the reactor and steam generator.

Liquidity in order to make nuclear fuel spherical solid particles have better, the smaller the particle size is easy to flow, not easy to crack due to collisions between the balls, ball weight is small, the whereabouts of collision force of small, solid materials have certain allowable limit stress, small particle particle shape the group also easy to change, so should the nuclear fuel balls do as little as possible, which requires the number placed inside the nuclear fuel is less. Free of nuclear fuel and nuclear fuel coolant ball ball adding some particle size smaller and uniform mixed together can make the packing porosity is very small, the heat transfer ability is enhanced, when the particle flow only smaller particle size coolant ball and the wall with a rolling, nuclear fuel ball hardly rolling, just follow the mobile. Nuclear fuel ball diameter of about 10 mm may be more appropriate, the size must be considered, and by determining the flow test ball.

For the thermal neutron reactor, spherical fuel reactors can be made of graphite and water as the moderator. With graphite as a moderator of inherent safety better, volume is larger, the graphite into columnar, placed inside the reactor vessel. If the use of water as a moderator, reactor volume can be greatly reduced, if the use of heavy water, will be better. Only water as moderator in the reactor, not used to derive the reactor heat, a heat insulation cavity between the pipes and the nuclear fuel, gas, so the heat can rarely be transferred to water, water does not evaporate in the reactor vessel, the pressure is small, the heat through the outer loop.

Radioactive fission products under normal operation condition of spherical fuel reactor leakage of fission products rarely, almost all were cured in the solid coolant inside, even if the nuclear fuel ball crack with only a few radioactive fission products leaked.

The steam generator of the invention of spherical fuel reactor is different from that of PWR steam generator, the function and structure of boiler is very similar with the. The nuclear fuel ball heat to the water, there can be a variety of ways. Nuclear fuel ball moves in the lifting transmission device, the section can be large, can be in improving the transmission device arranged inside the pipe, water pipe and the ball moving direction are consistent. System settings duct system, gas flow from the end to the high-end lifting transmission device bottom, nuclear fuel ball heat transfer through the water heat radiation, heat conduction, convection in air. If the diameter of the ball is big, the conveyor belt may allow the gap, gas through the nuclear fuel sphere packing, good heat transfer between the gas and the nuclear fuel ball, can make the air flow from the conveyor belt below upward flow, flow to the upper side of the pipe is transferred to the water, so the gas continuous flow and heat radiation, heat transfer to the water. If the ball packing enough clearance for gas flow in the reactor vessel, which also can through this way to heat. If the ball packing void ratio is big, also can set the gas loop, help the heat transfer, gas absorption nuclear fuel ball after the heat flows through the back water pipe, the heat to the water. In order to improve the heat transfer capacity of possible coolant, can in the aluminum package in spherical solid particles made of coolant, heat conduction ability of small spherical particles. The steam generator heat side also allow a liquid, adding liquid metal can be significantly strengthened heat transfer between spherical solid and cold side refrigerant. The steam generator heat side also allow a liquid, adding liquid metal can be significantly strengthened heat transfer between spherical solid and cold side refrigerant. Water may be added at the hot side heat transfer medium, water as nuclear fuel ball and the cold side, but usually don't want water into the reactor, in order to avoid this situation, the steam generator is arranged at the lower part of a water tank and a water pump, water pump used to pump water into the steam generator, the water reached the top of steam generator by the self gravity the downward flow, and contact with the nuclear fuel, cooling of nuclear fuel ball, and then flow back to the lower water tank, so that water plays the function of the heat transfer medium, the heat transfer to the cold side of the water. A similar set of steam generator of pressurized water reactor, using water circulation loop cooled nuclear fuel ball, the nuclear fuel ball heat transfer, water supply, and then through the steam generator heat exchange, the heat transfer to the two loop water is feasible. A similar set of steam generator of pressurized water reactor, using water circulation loop cooled nuclear fuel ball, the nuclear fuel ball heat transfer, water supply, and then through the steam generator heat exchange, the heat transfer to the two loop water is feasible. The steam generator is low, in order to prevent nuclear fuel from nuclear reactions, placed inside a strong neutron absorbing material, such as boron, cadmium. The steam generator is to produce a nuclear reaction heat from the outside of the boiler, nuclear fuel decay inside, emit strong ray, hence a radioactive environment, but compared to the high neutron flux reactor radiation small lot. High temperature nuclear fuel ball, can make the two loop water reach high temperatures, can meet the requirements of the thermal efficiency of supercritical, the reactor can have higher. If the use of high temperature materials, the nuclear fuel ball temperature out of the more high, and even can drive more efficient Brayton cycle (gas turbine) generator. Set a two heat exchange loop shielding radiation, can also be used for heating, thermochemical hydrogen production, coal liquefaction and gasification.

If the choice of neutron cross section of lower material as coolant, reduce harmful spherical fuel reactor neutron absorption, can have a larger increment ratio, especially if the design of fast neutron reactor, the value-added ability can be strong. You can use the PWR spent fuel discharged as fuel, transmutation of high level radioactive waste. Some solid materials neutron absorption cross section is very low, almost do not absorb neutrons, the solid as coolant, can make the lower concentration of nuclear fuel to reach the critical, so the spherical fuel reactor can make full use of nuclear fuel.

Spherical fuel reactor core fuel type, concentration, quantity, type, quantity of coolant, diameter, structure of nuclear fuel ball, can according to the actual use of further determined reactor.

Mechanical transmission system may be faulty, causes the ball to not be reported reactor, reactor core fuel can not be cooling. May lead to a core melt accident. A large number of solid reactor coolant, core melt, coolant and nuclear fuel to melt to form a melt, coolant radioactive substances may be covered up, to prevent its spread to the external environment, so even if a serious accident core melt have only a small amount of radioactive material leakage. Like other types of reactors, spherical fuel reactor can also use a lot of motile and non motile measures to prevent accidents in the reactor core melt development direction.

Spherical fuel reactor has a unique performance is safe, can use less energy, have shutdown but there are mobile nuclear fuel as waste heat to the steam generator, steam generator, there are a lot of water, you can slowly put the heat to the water. Even if the steam generator water loss, nuclear fuel ball is extended so wide, a heat transfer area of great, mononuclear spherical fuel power density is small, the nuclear fuel is dispersed into solid coolant quantity, can transfer heat by the heat conduction and thermal radiation. Also can use gravity to spherical solid particle coolant injected into the water side of the steam generator. The steam generator is covered up, forming a solid protective barrier of great.

Reactor waste heat can be utilized in a variety of ways can be derived, gas transfer system settings similar gas cooled reactor, for emergency reactor residual heat, gas transfer system may also be used for the gaseous fission product absorption purification. The reactor can be reserved water channel, used for reactor shutdown off normal heat transfer system failure when the reactor residual heat, water channel is empty in the reactor during normal operation, the general does not allow water to enter the. Water channel reservation and pressurized water reactor can be used the same principle, derived the reactor residual heat. The reactor vessel wall spiral arrangement of stainless steel pipe, core loss of cooling, can go to pipe water, to cool the core purpose.

The invention of spherical fuel reactor can be designed into a small power reactor, even in the core residual heat removal system all active are failure, can also be derived by measures of passive core residual heat. Because the reactor power of small volume, low power density, the system always have enough heat diffusion capacity of the reactor residual heat, so that the reactor has higher inherent safety. The inherent high security is easier to be accepted, the reactor can be used widely.

### Description of figures

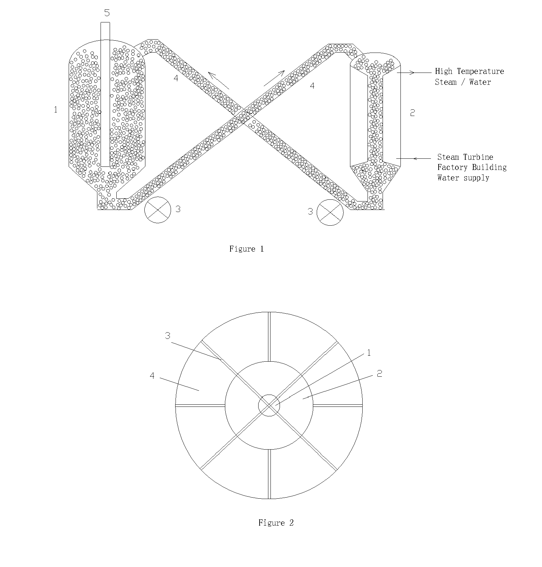

Fig. 1 Schematic diagram of the reactor system of spherical fuel 1 reactor vessel 2 steam generator 3 motor 4 lifting transmission device
Figure.2 with coolant outer spherical solid nuclear fuel 1 nuclear fuel 2 coolant 3 supporting structure of the 4 outer shell

### The specific way of implementing

The invention provides a solid nuclear fuel and coolant packaged together in spherical solid, and by mechanical transmission system make the spherical solid between the reactor and steam generator heat flow to spread to the steam generator of nuclear reactor. The reactor uses a wide range, can according to the actual use of further detailed design. Especially if the design into small power reactor, the inherent high safety, can be used in many fields.

## Claims

1. A spherical fuel reactor, which is **characterized in that** the nuclear fuel and coolant packaged together in spherical solid. Solid coolant not only plays with radioactive fission products, but also played a role in cooling of nuclear fuel.

2. Spherical fuel reactor as described in claim 1, **characterized in that** the reactor main loop system by the reactor pressure vessel, steam generator, two sets of spherical solid lifting transmission device, lifting transport device are respectively used to spherical solids from the lower outlet steam generator is transmitted to the upper part of the reactor vessel, enhance the entrance and the spherical solid from the lower export the reactor vessel enhancement is transmitted to the upper entrance steam generator, the spherical solid circulation between the reactor and steam generator, the heat from the nuclear reactions reported to the purpose of steam generator.

3. Spherical fuel reactor as described in claim 1, **characterized in that** the spherical solid is an inner layer is the nuclear fuel, the outer layer is the coolant, outside is a shell made of high temperature resistance and high strength solid, and support the rigid structure between the inner and outer layers.

4. Spherical fuel reactor as described in claim 1, **characterized in that** the lifting device is arranged for absorbing water, nuclear fuel ball heat, also set up a duct system, the gas inside the circular flow, the nuclear fuel ball of heat transfer to the water pipe.

5. Spherical fuel reactor as described in claim 1, **characterized in that** the nuclear fuel ball in the steam generator heat transfer inside the steam generator feed water, there are many long and narrow channel for nuclear fuel ball passes through.
